# EUROPÄISCHE PATENTSCHRIFT

(11) **EP 0 874 699 B1**
(45) Veröffentlichungstag und Bekanntmachung des Hinweises auf die Patenterteilung: **08.12.1999**
(21) Anmeldenummer: 97901559.1
(22) Anmeldetag: 20.01.1997
(51) Int. Cl.: B07C 5/34, G01N 21/90

(54) **VORRICHTUNG UND VERFAHREN ZUR INSPEKTION VON GEGENSTÄNDEN, INSBESONDERE GETRÄNKEFLASCHEN**
DEVICE AND PROCESS FOR INSPECTION OF OBJECTS, PARTICULARLY BEVERAGE BOTTLES
DISPOSITIF ET PROCEDE POUR CONTROLER DES OBJETS, EN PARTICULIER DES BOUTEILLES POUR BOISSONS

(30) Priorität: 19.01.1996 DE 29600902 U
(43) Veröffentlichungstag der Anmeldung: 04.11.1998
(73) Patentinhaber: HEUFT SYSTEMTECHNIK GMBH, 56659 Burgbrohl (DE)
(72) Erfinder: HEUFT, Bernhard, D-56659 Burgbrohl (DE)
(74) Vertreter: Gritschneder, Martin, Dipl.-Phys.
(86) Internationale Anmeldenummer: EP9700244
(87) Internationale Veröffentlichungsnummer: WO9726091

(56) Entgegenhaltungen:
- DE-U- 9 313 115
- GB-A- 785 223
- US-A- 4 915 237

## Beschreibung

Die Erfindung betrifft eine Vorrichtung und ein Verfahren zur Inspektion von Gegenständen, insbesondere leeren Getränkeflaschen. Die Vorrichtung enthält eine Transporteinrichtung, die eine Anzahl mit unterschiedlicher Geschwindigkeit laufender Transporteure mit im wesentlichen horizontaler Transportfläche zum Transportieren und gleichzeitigem Drehen der Gegenstände aufweist.

Bei einer derartigen, dem Oberbegriff des Anspruchs 1 entsprechenden, aus DE-A-35 32 068 bekannten Inspektionsvorrichtung besteht die Transporteinrichtung aus insgesamt vier mit unterschiedlicher Geschwindigkeit laufenden Transportbändern, die ohne Abstand nebeneinander angeordnet sind. Durch die unterschiedliche Geschwindigkeit der Transportbänder werden die auf ihnen stehenden Gegenstände in Drehung versetzt, so daß eine einzige Seitenwand-Prüfeinrichtung ausreicht, um jeden Gegenstand auf seinem gesamten Umfang zu inspizieren.

Aus EP-A-0 415 154 ist eine Inspektionsvorrichtung bekannt, bei der die Gegenstände von zwei Seitenwand-Prüfeinrichtungen inspiziert werden und auf dem Weg zwischen den beiden Seitenwand-Prüfeinrichtungen 90° um ihre vertikale Achse gedreht werden. Das Drehen der Gegenstände erfolgt dadurch, daß sie zwischen den beiden Seitenwand-Prüfeinrichtungen seitlich von Förderbändern erfaßt werden, die mit unterschiedlicher Geschwindigkeit laufen. In diesem Bereich werden die Gegenstände auf der Unterseite nicht abgestützt und in diesem Bereich kann daher eine Bodeninspektion durchgeführt werden.

Der Erfindung liegt die Aufgabe zugrunde, die universelle Einsetzbarkeit derartiger Vorrichtungen und Verfahren für unterschiedliche Gegenstände, insbesondere Leerflaschen mit unterschiedlichem Durchmesser zu verbessern.

Erfindungsgemäß wird diese Aufgabe durch die Kennzeichnenden Merkmale des Anspruchs 1 dadurch gelöst, daß die Transporteinrichtung von zwei mit seitlichem Abstand angeordneten Transporteuren gebildet wird, wobei innerhalb des Abstandes der Transporteure eine Boden-Prüfeinrichtung vorgesehen ist, die eine Strahlungsquelle und eine Erkennungseinrichtung aufweist.

Diese Lösung zeichnet sich durch mechanische Einfachheit und Robustheit aus.

Vorzugsweise ist über dem ersten, langsamer laufenden Transporteur ein sich in Transportrichtung erstreckendes Geländer so angeordnet, daß die Gegenstände an dem Geländer abrollen oder entlanggleiten können. Der Abstand des Geländers vom Rand des Transporteurs und der Abstand zwischen den beiden Transporteuren ist vorzugsweise so gewählt, daß die Gegenstände mit einem größeren Teil ihrer Bodenfläche auf dem ersten, langsameren Transporteur stehen als auf dem zweiten, schnelleren. Die Breite des Bereichs des langsameren Transporteurs, auf dem die Gegenstände stehen, kann bis etwa 1/3 des Radius der Gegenstände betragen. Der zweite, schnellere Transporteur hat vorzugsweise eine Oberfläche mit einem Reibbelag, so daß die Reibung der Standfläche der Gegenstände auf dem schnelleren Transporteur höher ist als auf dem langsameren Transporteur. Für besonders instabile Gegenstände können die Geländer auch mitlaufend ausgestaltet sein, in Form eines synchronlaufenden Riemens oder eines Transporteurs, der auf seinen Kettengliedern über senkrecht hochstehende Anschlagwinkel verfügt.

Vorzugsweise ist eine Seitenwand-Prüfeinrichtung vorgesehen, die eine Lichtquelle und eine Erkennungseinrichtung aufweist, zwischen denen die Gegenstände von der Transporteinrichtung hindurch transportiert werden. Um den Platzbedarf der Inspektionsanlage weiterhin zu minimieren, werden vorzugsweise weitere Inspektionseinrichtungen, wie Mündungskontrolle, Gewindekontrolle und Laugenkontrolle, während der Überschiebephase oder während der Drehphase gleichzeitig, z.B. gleichzeitig mit der Seitenwand-Prüfung, ausgeführt. Dieses ist möglich, da durch Stroboskop-Beleuchtung oder Shutter-Kameras ein Einfrieren der Bewegung erreicht wird und somit z.B. die Flaschendrehung keine störende Rolle spielt.

Es hat sich gezeigt, daß die Gegenstände ausreichend sicher stehen, obwohl sie nur an seitlichen Randsegmenten ihrer Standfläche abgestützt werden. Insbesondere ist die Geschwindigkeit, mit der sich die Gegenstände um die vertikale Achse drehen, sehr gleichmäßig.

Die Inspektionsvorrichtung wird an einem Transporteur angeordnet, auf dem die Gegenstände, z.B. Leerflaschen, befördert werden. Dieser Transporteur bildet den ersten Transporteur der Inspektionseinrichtung. Parallel dazu im Abstand von etwa 2/3 bis 3/4 des Durchmessers der Gegenstände und parallel zum ersten Transporteur ist der zweite Transporteur angeordnet. Am Einlaufende der Inspektionsvorrichtung werden die Gegenstände durch ein schräg über den ersten Transporteur verlaufendes Geländer seitlich in Richtung zum zweiten Transporteur verschoben, so daß sie mit Randbereichen ihrer Standfläche auf beiden Transporteuren stehen. Während des seitlichen Verschiebens werden sie dabei durch Überschubplatten gestützt, die die Lücke zwischen dem ersten Transporteur und dem zweiten Transporteur überbrücken. Die Überschubplatten sind im allegmeinen auf den Bereich beschränkt, in dem die Gegenstände von dem ersten Transporteur in Richtung des zweiten Transporteurs verschoben werden. Sobald die Gegenstände auf beiden Transporteuren stehen, ist keine zusätzliche Abstützung der Gegenstände mehr erforderlich, so daß sich die Überschubplatten nicht auf diesen Bereich erstrecken. Allenfalls bei sehr wenig standfesten Gegenständen, z.B. Getränkeflaschen mit kleiner Standfläche, kann z.B. zwischen beiden Transporteuren eine in Höhe der Transportebenen oder geringfügig tiefer angeordnete Schiene vorgesehen sein, die einem Kippen der Gegenstände in Fahrtrichtung oder entgegen der Fahrtrichtung entgegenwirkt.

Die Boden-Prüfung wird vorzugsweise zweimal in einem Abstand durchgeführt, innerhalb dessen sich die Gegenstände um 90° oder 270° gedreht haben. Dadurch kann trotz der Abdeckung der seitlichen Segmente durch die Transporteure der gesamte Bodenbereich inspiziert werden. Weiterhin kann die Bodeninspektion auch mehrfach nach Drehung um entsprechende Teilungen von 360° durchgeführt werden, z.B. in drei Teilabschnitten nach Drehungen von jeweils 60° oder 60° + 180°.

Es ist außerdem auch möglich, die Bodeninspektion in zwei möglichst kurzzeitig aufeinanderfolgenden Schritten durchzuführen, und zwar ohne definierte Drehung der Gegenstände zwischen beiden Schritten. Beide Schritte der Bodeninspektion werden dabei im Bereich der am Einlaufende oder am Auslaufende der Inspektionsvorrichtung angeordneten Überschubplatten durchgeführt. Die Überschubplatte besteht dazu aus transparentem Material, z.B. Glas oder kratzfestem Kunststoff. Unterhalb der transparenten Überschubplatte werden in Transportrichtung versetzt zwei Boden-Prüfeinrichtungen angeordnet. Die erste Boden-Prüfeinrichtung wird an der Stelle angeordnet, an der die Gegenstände mit etwa 60% ihrer Standfläche auf der Überschubplatte stehen, während sie mit den restlichen 40% der Standfläche noch auf dem ersten Transporteur weitergeführt werden. Die zweite Boden-Prüfeinrichtung wird stromabwärts an der Stelle angeordnet, an der die Gegenstände mit höchstens etwa 40% auf dem zweiten Transporteur stehen, während sich noch etwa 60% ihrer Standfläche auf der transparenten Überschubplatte befindet. Mittels der ersten und der zweiten Boden-Prüfeinrichtung kann dabei jeweils etwa 60% des Bodens inspiziert werden, wobei sich beide 60%-Bereiche auch unter Berücksichtigung einer geringfügigen Drehung der Gegenstände zu der gesamten Bodenfläche der Gegenstände ergänzen. Danach werden die Gegenstände mittels eines Geländers wieder quer zur Transportrichtung zurückverschoben, so daß sie nunmehr auf beiden Transporteuren zu stehen kommen und die Drehung z.B. der Gegenstände zur Seitenwandinspektion eingesetzt werden kann. Bei dieser Ausgestaltung der Erfindung werden die Gegenstände durch das Geländer soweit seitlich in Richtung zum zweiten Transporteur verschoben, daß sie den ersten Transporteur vollständig verlassen und nur noch auf der Überschubplatte und dem zweiten Transporteur stehen. Mittels eines von der anderen Seite her angreifenden Geländers werden die Gegenstände daher nach der zweiten Bodeninspektion wieder soweit zurück in Richtung zum ersten Transporteur verschoben, daß sie mit Randsegmenten ihrer Standfläche auf beiden Transporteuren stehen. Auch bei diesem Zurückverschieben werden die Gegenstände wiederum durch die Überschubplatte abgestützt, die bei dieser Ausgestaltung der Erfindung entsprechend verlängert ist. Die Seitenwand-Prüfung kann wie die zuerst erwähnte Ausführungsform der Boden-Prüfung nach einer Drehung der Gegenstände um 90° wiederholt werden oder der Blickwinkel der Erkennungseinrichtung, z.B. einer CCD-Kamera, wird so gewählt, daß sich die Gegenstände innerhalb dieses Blickwinkels um ca. 220 bis 270° drehen, so daß der gesamte Umfang inspiziert werden kann.

Ausführungsbeispiele der Erfindung werden nachfolgend anhand der Zeichnungen erläutert. Es zeigen
- Fig. 1 und 2: in Draufsicht bzw. in Seitenansicht eine Ausführungsform der Vorrichtung zur Inspektion von Gegenständen, bei der sowohl die Bodeninspektion als auch die Seitenwandinspektion nach einer Drehung von 90° wiederholt werden;
- Fig. 3 und 4: in Draufsicht bzw. in Seitenansicht eine Ausführungsform, bei der die Seitenwandinspektion kontinuierlich innerhalb eines Bereichs durchgeführt wird, in dem sich die Gegenstände um etwa 220° drehen, während die Bodeninspektion nach einer Drehung von 90° wiederholt wird, und
- Fig. 5: in Draufsicht eine Ausführungsform, bei der die Bodeninspektion in zwei Schritten innerhalb des Bereichs der am Einlaufende angeordneten Überschubplatte durchgeführt wird.

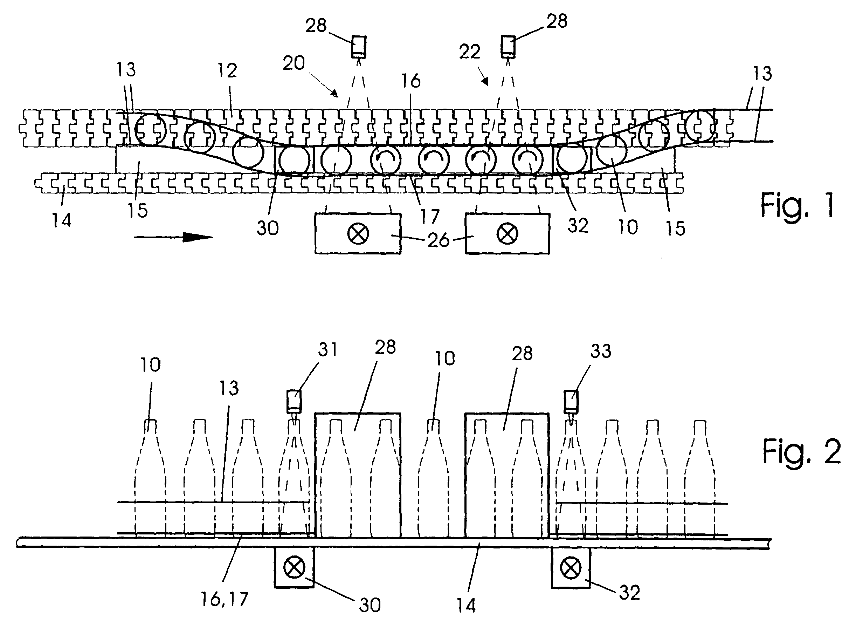

Fig. 1 und 2 zeigen eine Vorrichtung zur Inspektion von Leerflaschen 10 als die zu inspizierenden Gegenstände. Die Transporteinrichtung setzt sich aus einem ersten Transporteur 12 und einem zweiten Transporteur 14 zusammen. Die Leerflaschen 10 werden auf dem ersten Transporteur 12 zur Inspektionsvorrichtung transportiert. Zwischen beiden Transporteuren 12, 14 besteht ein Abstand von etwa 2/3 bis 3/4 des Durchmessers der Leerflaschen 10. Der erste und der zweite Transporteur 12, 14 können übliche Gliederkettenförderer oder Förderbänder sein. Vor der Inspektionsvorrichtung werden die Leerflaschen 10 durch seitliche Geländer 13 und mittels einer Überschubplatte 15, die die Lücke zwischen den Transporteuren 12, 14 im Bereich der Verschiebung überbrückt, seitlich soweit verschoben, daß sie nur noch mit einem Randsegment auf dem ersten Transporteur 12 stehen, während sie mit dem gegenüberliegenden Randsegment auf dem zweiten Transporteur 14 stehen. In die Überschubplatte ist auch ein Bodenabblaser integriert.

Der zweite Transporteur 14 bewegt sich mit einer z.B. um 20% höheren Geschwindigkeit als der erste Transporteur 12, so daß die auf beiden Transporteuren 12, 14 stehenden Leerflaschen 10 um ihre vertikale Achse gedreht werden. Die Leerflaschen 10 haben dabei die Tendenz, während ihrer Drehung zum langsameren Transporteur, also dem ersten Transporteur 12, hin zu wandern. Um eine solche seitliche Wanderung oder Verschiebung der Leerflaschen 10 zu verhindern, ist über dem ersten Transporteur 12 ein sich in Transportrichtung erstreckendes Geländer 16 angeordnet. Die Position des Geländers 16 quer zur Transportrichtung ist dabei so eingestellt, daß der Abstand zum Rand des ersten Transporteurs etwa 1/6 des Durchmessers der Leerflaschen 10 entspricht, so daß die Leerflaschen 10 auf einem Randbereich dieser Breite des ersten Transporteurs 12 stehen. Zusätzlich ist auch über dem zweiten Transporteur 14 ein Geländer 17 angeordnet, da bisweilen einzelne Leerflaschen 10 z.B. infolge Bodenunebenheiten auch zum schnelleren Transporteur 14 hin wandern können.

Die Transportrichtung und die Drehung der Gegenstände ist durch Pfeile angegeben. In einem Abstand, innerhalb dessen sich die Leerflaschen 10 um 90° um ihre vertikale Achse drehen, sind Seitenwand-Prüfeinrichtungen 20, 22 angeordnet, die jeweils aus einer flächigen Lichtquelle 26 und einer CCD-Kamera 28 bestehen. Eine zweimalige Seitenwandinspektion mit zwischenzeitlicher Drehung der Flaschen um 90° reicht selbstverständlich nur bei Leerflaschen aus transparentem Material, wie Glas oder Kunststoff, aus. Die Seitenwand-Prüfeinrichtungen überprüfen die Leerflaschen in üblicher Weise auf Fehlerfreiheit und werden daher nicht näher beschrieben.

Innerhalb der zwischen den beiden Transporteuren 12, 14 bestehenden Lücke sind unterhalb der Transportebene flächenhafte Lichtquellen 30, 32 vorgesehen, die Teil einer Boden-Prüfeinrichtung sind. Die dazugehörenden CCD-Kameras 31, 33 befinden sich oberhalb der Leerflaschen 10. Die CCD-Kameras nehmen in üblicher Weise durch die Flaschenöffnung hindurch ein Abbild des Flaschenbodens auf und unterziehen dieses einer Prüfung. Die beiden Boden-Prüfeinrichtungen und damit auch die dazugehörenden Lichtquellen 30, 32 haben ebenfalls einen Abstand in Transportrichtung, innerhalb dessen sich die Leerflaschen 10 um 90° drehen, so daß insgesamt der gesamte Bodenbereich inspiziert wird. Nach dem Durchgang durch die Inspektionsvorrichtung werden die Leerflaschen 10 wieder durch seitliche Geländer 13 und eine Überschubplatte 15 vollständig auf den ersten Transporteur 12 zurückgeschoben.

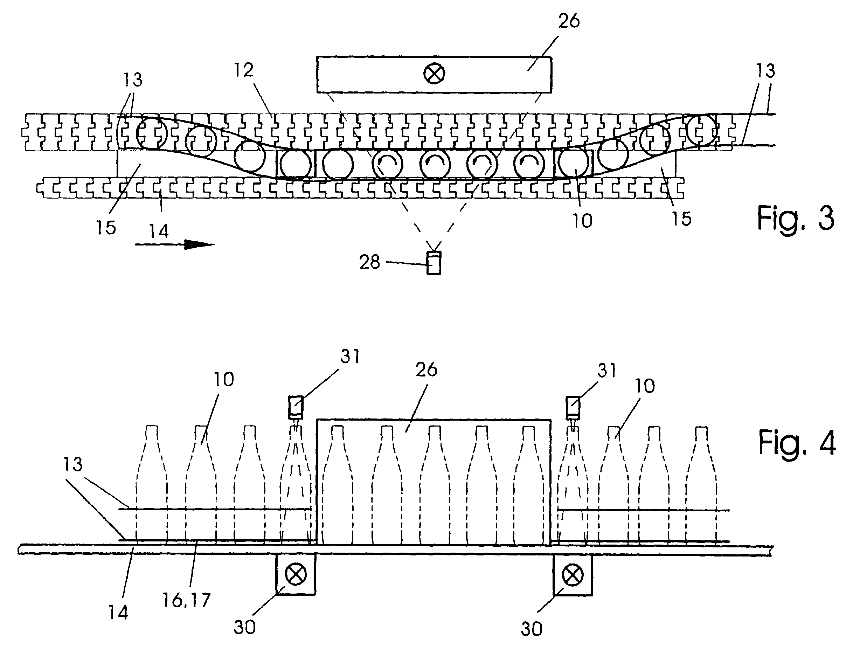

Fig. 3 und 4 zeigen eine Prüfvorrichtung ähnlich der von Fig. 1 und 2, wobei jedoch nur eine einmalige Seitenwand-Prüfung vorgenommen wird. Die Seitenwand-Prüfeinrichtung besteht wiederum aus einer flächenhaften Lichtquelle 26 und einer CCD-Kamera. Die Lichtquelle 26 erstreckt sich hierbei jedoch über eine Länge, innerhalb der die Leerflaschen 10 eine Drehung um 90° um ihre vertikale Achse ausführen. Dies gilt für Leerflaschen oder sonstige Gegenstände aus transparentem Material. Wenn die Leerflaschen oder sonstige Gegenstände aus undurchsichtigem Material bestehen oder wenn sich um die gesamte Flasche erstreckenden Etiketten geprüft werden sollen, so erstreckt sich die Lichtquelle 26 über eine Länge, innerhalb der die Gegenstände eine vollständige Drehung ausführen. In Realität genügt dabei eine Drehung von etwa 270° oder sogar nur 220° um den gesamten Umfang einer Leerflasche zu inspizieren, wenn berücksichtigt wird, daß zum einen die Kamera ohnehin in jedem Augenblick etwa 90° des Umfangs der Leerflasche erfaßt und zum anderen sich während der Vorbeibewegung der Leerflasche 10 an der CCD-Kamera 28 der Blickwinkel vom einen Rand zum anderen Rand der Weitwinkeloptik der CCD-Kamera 28 ändert. Hierzu ist es erforderlich, die CCD-Kamera auf der Seite des schnelleren Transporteurs, also des zweiten Transporteurs 14, angeordnet ist, wie dies in Fig. 3 gezeigt ist.

Bei dem Ausführungsbeispiel von Fig. 3, 4 sind wiederum zwei Boden-Prüfeinrichtungen mit einem gegenseitigen Abstand, innerhalb dessen sich die Leerflaschen um 90° oder 270° um ihre vertikale Achse drehen, angeordnet. In Fig. 4 sind dabei wiederum nur die Lichtquellen 30, 32 unter den Leerflaschen 10 und CCD-Kamera 31, 33 über den Leerflaschen 10 angeordnet.

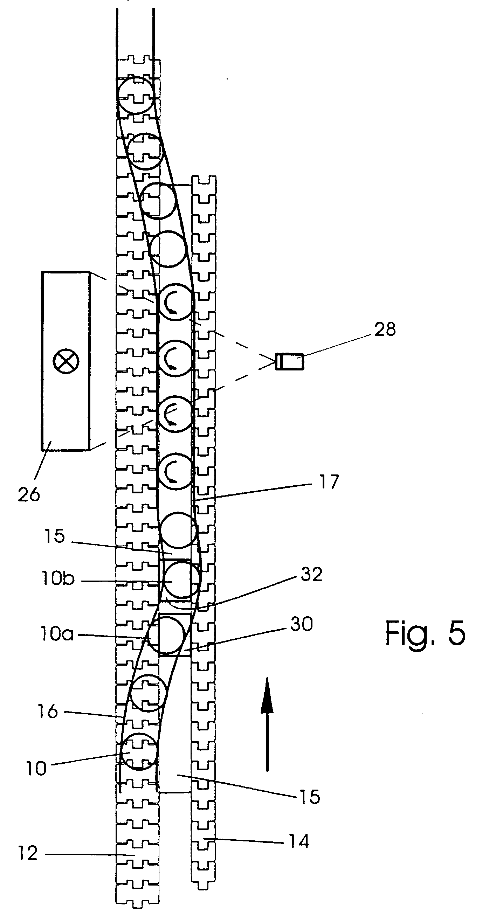

In Fig. 5 ist ein Ausführungsbeispiel gezeigt, bei dem die Boden-Prüfung in zwei mit kurzem Abstand aufeinanderfolgenden Schritten innerhalb der Überschubplatte 15 durchgeführt wird, die am Einlaufende der Inspektionsvorrichtung angeordnet ist. Mittels des Geländers 16 werden die Leerflaschen 10 dabei soweit in Richtung zum zweiten Transporteur 14 verschoben, daß sie nicht mehr auf dem ersten Transporteur 12 stehen sondern nur noch auf der Überschubplatte 15 und dem zweiten Transporteur 14. An der Stelle, an der die Leerflaschen 10 noch zu etwa 40% auf dem ersten Transporteur 12 stehen und mit 60% bereits auf der Überschubplatte 15 stehen, ist die erste flächenhafte Lichtquelle 30 der Boden-Prüfeinrichtung angeordnet, senkrecht über der sich die nicht dargestellte erste CCD-Kamera befindet. In Fig. 5 befindet sich die Leerflasche 10a über der ersten Lichtquelle 30. Nahezu unmittelbar anschließend ist die zweite flächenhafte Lichtquelle 32 angeordnet, wobei sich hier die Leerflaschen 10 mit etwa 60% ihrer Standfläche auf der Überschubplatte 15 und mit 40% auf dem zweiten Transporteur 14 befinden. Bei dem dargestellten Ausführungsbeispiel befindet sich die Leerflasche 10b über der zweiten Lichtquelle 32. Auch über der zweiten Lichtquelle 32 befindet sich eine nicht dargestellte CCD-Kamera. Zwischen den beiden Lichtquellen 30 und 32 und damit zwischen den beiden Schritten der Boden-Prüfung drehen sich die Gegenstände 10 aufgrund ihrer Trägheit und durch die Abstützung des einen Randsegments und anschließend des gegenüberliegenden Randsegments auf der Überschubplatte 15 nur geringfügig, so daß sich die beiden 60%-Bereiche der Bodenfläche, die im ersten und im zweiten Schritt der Boden-Prüfung erfaßt werden, insgesamt zur vollständigen Bodenfläche ergänzen. Das Geländer 17 schwingt etwas in Richtung zum ersten Transporteur 12 zurück, so daß nach der zweiten Lichtquelle 32 die Gegenstände 10 nach der Bodeninspektion und beim Verlassen der Überschubplatte 15 wieder mit gegenüberliegenden Randsegmenten auf beiden Transporteuren 12, 14 stehen. Danach wird die Seitenwand-Prüfung in der in Verbindung mit den Fig. 1 und 2 bzw. 3 und 4 beschriebenen Weise durchgeführt. Bei dem dargestellten Ausführungsbeispiel wird entsprechend den Fig. 3 und 4 eine einmalige Seitenwand-Prüfung durchgeführt, wozu eine CCD-Kamera 28 mit entsprechend großem Blickwinkel verwendet wird.

Die Inspektionsvorrichtung kann auch für nicht-rotationssymmetrische Gegenstände, z.B. Leerflaschen mit quadratischem Grundriß eingesetzt werden. Um eine Drehung derartiger Gegenstände ohne wesentliche seitliche Verlagerung des Schwerpunkte zu erzielen, ist das Geländer dann entsprechend der Kurve geformt, die eine Eckkante eines solchen Gegenstandes während der Drehung und dem gleichzeitigen Weitertransport beschreibt. Die Seitenwand-Prüfeinrichtung kann dabei wiederum entsprechend Fig. 1 oder Fig. 3 ausgebildet sein. Die Boden-Prüfung findet wiederum in einem Abstand statt, innerhalb dessen sich die Leerflaschen um 90° oder 270° drehen, so daß insgesamt im wesentlichen der gesamte Bodenbereich geprüft wird.

## Patentansprüche

1. Vorrichtung zur Inspektion von Gegenständen (10) mit einer Transporteinrichtung, die eine Anzahl mit unterschiedlicher Geschwindigkeit laufender, eine im wesentlichen horizontale Transportfläche aufweisender Transporteure (12, 14) zum Transportieren der Gegenstände (10) und gleichzeitigen Drehen der Gegenstände (10) um ihre vertikale Achse aufweist, dadurch gekennzeichnet, daß zwei Transporteure (12, 14) vorgesehen sind, die einen gegenseitigen seitlichen Abstand aufweisen, und daß innerhalb des Abstandes der Transporteure (12, 14) eine Boden-Prüfeinrichtung (30, 32) vorgesehen ist.

2. Vorrichtung nach Anspruch 1, dadurch gekennzeichnet, daß über dem ersten, langsamer laufenden Transporteur (12) ein sich in Transportrichtung erstreckendes Geländer (16) zur Führung der Gegenstände (10) angeordnet ist, wobei die Gegenstände (10) auf dem ersten Transporteur (12) auf dem Randstreifen zwischen dem Geländer (16) und dem Rand des ersten Transporteurs (12) stehen und die Breite dieses Randstreifens bis etwa 1/3 des Durchmessers der Gegenstände beträgt.

3. Vorrichtung nach Anspruch 1 oder 2, dadurch gekennzeichnet, daß die Gegenstände (10) durch Geländer (16, 17) seitlich geführt werden, die über dem ersten bzw. zweiten Transporteur (12, 14) angeordnet sind und sich in Transportrichtung erstrecken.

4. Vorrichtung nach Anspruch 2 oder 3, dadurch gekennzeichnet, daß das oder die Geländer (16, 17) so angeordnet sind, daß die Gegenstände etwas zum langsameren, ersten Transporteur (12) hin versetzt sind.

5. Vorrichtung nach einem der vorangehenden Ansprüche, dadurch gekennzeichnet, daß zwei Boden-Prüfeinrichtungen (30, 32) vorgesehen sind, die in einem Abstand, innerhalb dessen sich die Gegenstände (10) um etwa 90° oder 270° drehen, angeordnet sind.

6. Vorrichtung nach einem der Ansprüche 1 bis 4, dadurch gekennzeichnet, daß zwischen dem ersten und dem zweiten Transporteur (12, 14) eine transparente Überschubplatte (15) angeordnet ist, daß innerhalb der Längserstreckung der Überschubplatte (15) zwei Boden-Prüfeinrichtungen (30, 32) angeordnet sind und daß die Geländer (16, 17) so angeordnet sind, daß die Gegenstände im Bereich der einen Boden-Prüfeinrichtung (30) mit etwa 40% ihrer Standfläche auf dem einen Transporteur (10) und mit etwa 60% ihrer Standfläche auf der Überschubplatte (15) stehen und daß sie bei der anderen Boden-Prüfeinrichtung (32) mit etwa 40% ihrer Standfläche auf dem anderen Transporteur (12) und mit etwa 60% auf der Überschubplatte (15) stehen.

7. Vorrichtung nach Anspruch 6, dadurch gekennzeichnet, daß die beiden Boden-Prüfeinrichtungen (30, 32) in so geringem Abstand angeordnet sind, daß sich die beiden 60%-Bereiche, die von den Boden-Prüfeinrichtungen (30, 32) erfaßt werden, zur gesamten Bodenfläche des betreffenden Gegenstandes ergänzen.

8. Vorrichtung nach einem der vorangehenden Ansprüche, gekennzeichnet durch eine Seitenwand-Prüfeinrichtung (22, 24), die eine Lichtquelle (26) und eine Erkennungseinrichtung (28) aufweist, zwischen denen die beiden Transporteure (12, 14) angeordnet sind.

9. Verfahren zur Inspektion von Gegenständen (10), bei dem die Gegenstände mit einer Transporteinrichtung befördert werden, die eine Anzahl mit unterschiedlicher Geschwindigkeit laufender, eine im wesentlichen horizontale Transportfläche aufweisende Transporteure (12, 14) zum Transportieren der Gegenstände (10) und gleichzeitigen Drehen der Gegenstände um ihre vertikale Achse aufweist, dadurch gekennzeichnet, daß zwei Transporteure (12, 14) vorgesehen sind, die einen gegenseitigen seitlichen Abstand aufweisen und daß innerhalb des Abstandes der Transporteur (12, 14) eine Boden-Prüfung (30, 32) vorgenommen wird.

10. Verfahren nach Anspruch 8, dadurch gekennzeichnet, daß während des Drehens der Gegenstände (10) eine Seitenwand-Prüfung (22, 24) durchgeführt wird.

## Claims

1. Device for inspecting objects (10), with a conveyor installation, which features a number of conveyors (12, 14) running at different speeds and featuring an essentially horizontal conveyor surface for conveying the objects (10) and at the same time rotating the objects (10) about their vertical axis, characterised in that two conveyors (12, 14) are provided, which exhibit a mutual lateral separation, and in that a bottom checking installation (30, 32) is provided within the distance separating the conveyors (12, 14).

2. Device according to Claim 1, characterised in that a rail (16) for guiding the objects (10) is arranged stretching in the direction of transport above the first, slower running conveyor (12), in such a way that the objects (10) on the first conveyor (12) stand on the edge strip between the rail (16) and the edge of the first conveyor (12), and the width of this edge strip amounts to up to about 1/3 of the diameter of the objects.

3. Device according to Claim 1 or 2, characterised in that the objects (10) are guided laterally by rails (16, 17) which are arranged above the first and second conveyors (12, 14) respectively and extend in the direction of transport.

4. Device according to Claim 2 or 3, characterised in that the rail or rails (16, 17) are so arranged that the objects are shifted slightly towards the first, slower conveyor (12).

5. Device according to one of the preceding claims, characterised in that two bottom checking installations (30, 32) are provided, which are arranged with a separation within which the objects (10) rotate by about 90° or 270°.

6. Device according to one of Claims 1 to 4, characterised in that a transparent crossover plate (15) is arranged between the first and second conveyors (12, 14), in that two bottom checking installations (30, 32) are arranged within the longitudinal extent of the crossover plate (15), and in that the rails (16, 17) are arranged in such a way that the objects, in the region of one bottom checking installation (30), stand with about 40% of their under surface on the first conveyor (10) and with about 60% of their under surface on the crossover plate (15), and that, at the other bottom checking installation (32), they stand with about 40% of their under surface on the other conveyor (12) and about 60% on the crossover plate (15).

7. Device according to Claim 6, characterised in that the two bottom checking installations (30, 32) are arranged such a small distance apart that the two 60% regions which are covered by the bottom inspection installations (30, 32) amount to the entire bottom surface of the objects in question.

8. Device according to any of the preceding claims, characterised by a side wall checking installation (22, 24), which features a light source (26) and a recognition installation (28), between which the two conveyors (12, 14) are arranged.

9. Method for inspecting objects (10), in which the objects are transported by a conveyor installation, which features a number of conveyors (12, 14) running at different speeds and featuring an essentially horizontal conveyor surface for conveying the objects (10) and at the same time rotating the objects (10) about their vertical axis, characterised in that two conveyors (12, 14) are provided, which exhibit a mutual lateral separation, and in that a bottom check (30, 32) is undertaken within the distance separating the conveyors (12, 14).

10. Method according to Claim 8, characterised in that a side wall check (22, 24) is carried out while the objects (10) are being rotated.

## Revendications

1. Dispositif destiné à contrôler des objets (10), comprenant un dispositif de transport, qui comporte un nombre donné de transporteurs (12, 14) qui se déplacent à vitesse différente et sont formés par une surface de transport sensiblement horizontale, et qui sont destinés à transporter des objets (10) et en même temps à faire tourner les objets (10) autour de leur axe vertical, caractérisé en ce qu'il est prévu deux transporteurs (12, 14), qui sont disposés à une distance donnée l'un à côté de l'autre et en ce qu'il est prévu un dispositif de contrôle du fond (30, 32), monté dans l'intervalle entre les transporteurs (12, 14).

2. Dispositif selon la revendication 1, caractérisé en ce qu'une rambarde (16), destinée à guider les objets (10) et orientée dans le sens du transport, est montée au-dessus du premier transporteur (12) a vitesse plus lente, les objets (10) étant posés à la verticale sur le premier transporteur (12) sur la bande de bordure entre la rambarde (16) et le bord du premier transporteur (12), et la largeur de ladite bande de bordure est égale a 1/3 environ du diamètre des objets.

3. Dispositif selon la revendication 1 ou 2, caractérisé en ce que les objets (10) sont guidés latéralement par des rambardes (16, 17), qui sont montées au-dessus du premier et du deuxième transporteur (12, 14) et qui sont orientées dans le sens du transport.

4. Dispositif selon la revendication 2 ou 3, caractérisé en ce que le ou les rambardes (16, 17) sont montées de telle sorte que les objets sont quelque peu décalés vers le premier transporteur (12) plus lent.

5. Dispositif selon l'une quelconque des revendications précédentes, caractérisé en ce qu'il est prévu deux dispositifs de contrôle du fond (30, 32), qui sont montés à un intervalle donné l'un de l'autre, à l'intérieur duquel les objets (10) tournent sur 90° ou 270°.

6. Dispositif selon l'une quelconque des revendications 1 à 4, caractérisé en ce qu'une plaque de jonction (15) transparente est disposée entre le premier et le deuxième transporteur (12, 14), en ce que deux dispositifs de contrôle du fond (30, 32) sont montés dans la plaque de jonction (15) dans le sens longitudinal, et en ce que les rambardes (16, 17) sont montées de telle sorte que les objets dans la zone de l'un des dispositifs de contrôle du fond (30) sont posés avec environ 40 % de leur surface d'appui sur l'un des transporteurs (10) et avec environ 60 % de leur surface d'appui sur la plaque de jonction (15) et en ce que lesdits objets dans la zone de l'autre dispositif de contrôle du fond (32) sont posés avec environ 40 % de leur surface d'appui sur l'autre transporteur (12) et avec environ 60 % de leur surface d'appui sur la plaque de jonction (15).

7. Dispositif selon la revendication 6, caractérisé en ce que les deux dispositifs de contrôle du fond (30, 32) sont disposés à une distance si faible l'un de l'autre que les deux zones à 60 %, qui sont analysées par les dispositifs de contrôle du fond (30, 32) se complètent pour former la totalité de la surface de fond de l'objet concerné.

8. Dispositif selon l'une quelconque des revendications précédentes, caractérisé par un dispositif de contrôle de la paroi latérale (22, 24), qui comprend une source lumineuse (26) et un dispositif d'analyse (28), entre lesquels sont montés les deux transporteurs (12, 14).

9. Procédé destiné à contrôler des objets (10), dans lequel les objets sont transportés sur un dispositif de transport qui comporte un nombre donné de transporteurs (12, 14) qui se déplacent à vitesse différente et sont formés par une surface de transport sensiblement horizontale, et qui sont destinés à transporter des objets (10) et en même temps à faire tourner les objets (10) autour de leur axe vertical, caractérisé en ce qu'il est prévu deux transporteurs (12, 14), qui sont disposés à une distance donnée l'un à côté de l'autre et en ce qu'il est prévu d'effectuer un contrôle du fond (30, 32), à l'intérieur de l'intervalle entre les transporteurs (12, 14).

10. Procédé selon la revendication 9, caractérisé en ce qu'un contrôle de la paroi latérale (22, 24) est effectué pendant la rotation des objets (10).
